# EUROPEAN PATENT SPECIFICATION

(11) **EP 1 699 298 B1**
(45) Date of publication and mention of the grant of the patent: **26.09.2012**
(21) Application number: 04815865.3
(22) Date of filing: 28.12.2004
(51) Int. Cl.: A23G 3/00

(54) **COATED CONFECTIONERY PRODUCT**
ÜBERZOGENE SÜSSWARE
PRODUIT DE CONFISERIE ENROBÉ

(30) Priority: 30.12.2003 US 533284 P
(43) Date of publication of application: 13.09.2006
(73) Proprietor: WM. WRIGLEY JR. COMPANY, Chicago, Illinois 60611 (US)
(72) Inventor: ALEXANDER, Lonnette, Chicago, IL 60649 (US); CLARK, James, C., St. Louis, MO 63125 (US); STAWSKI, Barbara, Z., Forest Park, IL 60130 (US); KURES, Vasek, J., Willow Springs, IL 60480 (US)
(74) Representative: Rickard, David John
(86) International application number: PCT/US2004/043872
(87) International publication number: WO 2005/065461

(56) References cited:
- WO-A-03/059079
- DE-A1- 3 941 490
- US-A- 5 578 336
- US-A1- 2003 198 713
- US-B1- 6 207 207

## Description

### BACKGROUND

The present invention relates to confectionary products and particularly to confectionary products that are coated with multiple layers each having different properties.

Numerous coated confectionaries are available. Many confectionaries, such as M&M's CRISPIES, have a hard center, with a chocolate covering followed by a hard shell coating, as disclosed in U.S. Patent No. 6,207,207. Other confectionaries, coated and non-coated, have breath-freshening properties. Some coated confectionaries have flavor in the coating layers. U.S. Patent No. 6,783,783, discloses a center tablet composition and coating layers having an initial mild flavor impact that increases to a more intense flavor as the product remains in the mouth. This product a compressed tablet center, a first coating layer comprising a fat, a hard shell coating, and a film coating on the outside.

Yet, additional embodiments are desirable. For example, it would be desirable if a coated product had a soft center, such as a chewy center, gummy center, soft chewy gummy center or a pressed chewy center. One problem is that such centers will typically contain higher levels of moisture than a compressed center tablet or hard center, as well as being soft. Providing multiple coatings, such as a compound coating and a hard outer shell, on such centers thus involves new challenges.

Chewy centers, compared to hard centers, have different and individual characteristics that would effect how they arc coated. A pressed tablet is typically low in moisture and has a smooth surface. The soft center would be relatively high in moisture and rougher in surface. The pressed tablet would have a non-tacky surface and the soft center would have a tacky surface or an oily, slick surface. The pressed tablet would not deform during the coating process, whereas the soft center could easily deform. These characteristics of the centers effect how the coatings adhere to the center, how well the coatings create smooth, even layers around the center, and how well the finished product keeps its desired shape during coating. Also, there would be a much greater likelihood of oil or moisture migration from the center to the layers with the soft center, creating additional formula considerations with soft centers that would not exist with pressed tablet centers. Because of these differences, one can not just switch centers and keep the layers the same.

### SUMMARY OF THE INVENTION

A coated confectionery product has been invented which solves the above mentioned problems, and surprisingly does not require an outer film coating. The product comprises a chewy confectionery center being a manmade, non-chocolate, candy center or composition, with the proviso that dried fruits, nuts, coffee beans, starch based products namely puffed or flaked cereals, cookies or biscuits, are not included in the term confectionary center; a first non-chocolate, fat containing compound coating surrounding the confectionery center; and a second coating surrounding the first coating and comprising a hard shell made from one or more sugars, polyols, high intensity sweeteners and mixtures thereof; a first binder coating between the confectionary center and the first coating; and a second binder coating between the first and second coating; the binder coatings comprising a binder. It has been found that such a product can be made without the film coating applied to products disclosed in U.S. Patent No. 6,783,783. In those embodiments, the second coating is the outermost coating of the product.

### BRIEF DESCRIPTION OF THE DRAWINGS

Figure 1 is a partially broken away perspective view of a preferred embodiment of the present invention.

Figure 2 is a process diagram of a preferred embodiment of the method of the present invention.

### DETAILED DESCRIPTION OF THE DRAWINGS AND PREFERRED EMBODIMENTS OF THE INVENTION

The present invention will now be further described. In the following passages, different aspects of the invention are defined in more detail. Each aspect so defined may be combined with any other aspect or aspects unless clearly indicated to the contrary. In particular, any feature indicated as being preferred or advantageous may be combined with any other feature or features indicated as being preferred or advantageous.

The present invention relates to a coated confectionery product which provides a combination of organoleptic effects. The invention relates to a coated confectionery product comprising a chewy confectionery center.

In a one embodiment, the invention relates to a coated confectionery product comprising a gummy confectionery center.

Alternatively, the invention relates to a coated confectionery product comprising a soft confectionery center.

In a preferred embodiment, the invention relates to a coated confectionery product comprising a pressed chewy center.

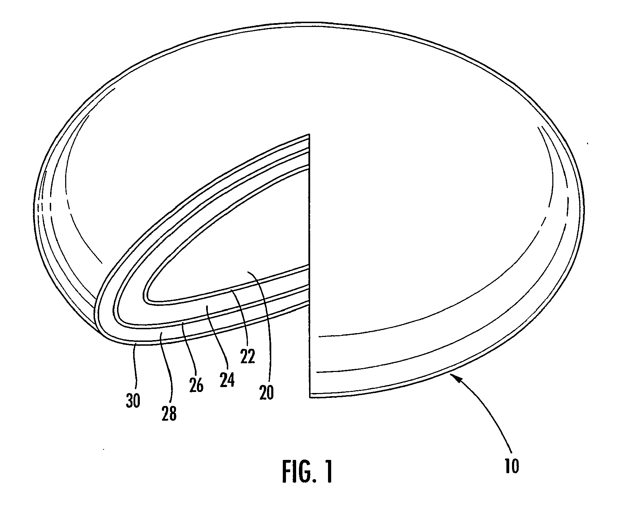

As shown in Figure 1, a preferred coated confection 10 of the present invention comprises a confectionery center 20, a first binder layer 22, a compound coating layer 24, a second binder layer 26, a hard shell layer 28, and, optionally, a film coating layer 30.

As used herein the term "confectionery center" refers to a manmade, non-chocolate, candy center or composition. Dried fruits, nuts, coffee beans, starch based products (such as puffed or flaked cereals, cookies or biscuits) are not included in the term "confectionery center" as used in the present invention. The term "non-chocolate," as used herein, is meant to exclude any confectionary product comprising a sweet chocolate, milk chocolate, buttermilk chocolate, bittersweet chocolate or other chocolate defined in 21 C.F.R. § 163, and is substantially free of cocoa powder. The compound coating is also non-chocolate.

The confectionery center 20 may comprise a mixture of base materials, thickeners, colorants and flavors. The base material may be a sugar or a polyol. Among the sugars that may be used are sucrose, dextrose, lactose, maltose and other common sugars. In addition, base materials may include non-sugar bulking agents. Among these are polyols such as sorbitol, maltitol, mannitol, xylitol, hydrogenated isomaltalose, lactitol, erythritol and combinations thereof. High intensity sweeteners such as acesulfame K, aspartame, alitame, sucralose, glycyrrhizin, saccharin and cyclamates may also be included with the base materials.

Thickeners include corn syrup, gelatin, pectin, and other common thickeners and are added in amounts that achieve the desired organoleptic effect. In one embodiment of the present invention, the confectionery center 20 comprises a chewy candy center. The chewy center utilized in the practice of the present invention comprises sugar, corn syrup, fat and optionally, gelatin, which provide the desired chewy texture. Preferably, the chew center comprises gelatin in the amount of about 1% to about 2% and fat in an amount of about 4% to about 10% by weight of the center. In another embodiment of the present invention, the confectionery center 20 comprises a gummy candy center. The gummy center utilized in the practice of the present invention comprises sugar, corn syrup, gelatin and optionally, pectin, which provide the desired gummy texture. Preferably, the gummy center comprises gelatin in the amount of about 4% to about 8% and pectin in the amount of about 0.5% to about 1% by weight of the center. In an alternate embodiment of the present invention, the confectionery center 20 comprises a soft chewy or a soft gummy candy center. The soft chewy gummy center comprises sugar, corn syrup and pectin, with pectin preferably in the amount of about 0.5% to about 2%, and more preferably about 2% by weight of the center, to achieve the desired soft chewy gummy texture. In yet another alternate embodiment, the confectionery center 20 comprises a pressed chewy candy center. The pressed chewy center utilized in the practice of the present invention comprises sugar, corn syrup and fat, which provide the desired chewy texture. Preferably, the pressed chewy center comprises sugar in the amount of about 50% to about 60%, corn syrup in the amount of about 30% to about 40 % and fat in the amount of about 1% to about 5% by weight of the center.

Pressed centers or pressed chewy centers may also include binders and lubricants. Binders that are commonly used are natural gums and hydrocolloids such as gum arabic, guar gum, agar, alginates, gum tragacanth, gelatin, corn syrups, modified starches, maltodextrins and optionally agglomerated dextrose. Most commonly used binders are gelatin, gum arabic or corn syrups. When non-sugar polyols such as sorbitol are used as the base material, binders are not needed for binding since many of these polyols are easily compressed to form centers. In some cases polyols such as sorbitol may also act as a binder and may be combined with sugar to form the base materials for the compressed chewy center.

Lubricants may be used to give good release from the press tooling or die and punches. A variety of lubricants or non-stick agents may be used in a pressed chewy center to act as release agents. Some of these are starch, acetylated monoglycerides, waxes, lecithins, emulsifiers, and mono-, di-, tristearates. The most common of these lubricants are magnesium or calcium stearate and stearic acid. Solid lubricants may be added to the center composition to help form the center and allow for its release. Lubricants usually comprise about 0.5% to about 2% of the center. In some instances, low levels of flow agents such as silicon dioxide are added to the pressed chewy center composition to help the flow of the mixture into the press tooling.

Flavoring agents are contemplated for use in the confectionery centers and the coatings of the present invention. Preferably flavoring agents are added at a level of about 0.01% to about 5% by weight of the confectionery center. The flavoring agents may comprise essential oils, synthetic flavors, or mixtures including but not limited to oils derived from plants and fruits such as citrus oils, fruit essences, peppermint oil, spearmint oil, clove oil, oil of wintergreen, anise and the like. Artificial flavoring components are also contemplated for use in confectionery centers of the present invention. Those skilled in the art will recognize that natural and artificial flavoring agents may be combined in any sensorially acceptable blend. All such flavors and flavor blends are contemplated by the present invention. Encapsulated flavors are also contemplated for use in the present invention.

Colors and other additives are also contemplated for use in the confectionery centers and the coatings of this invention.

Although the confectionery center 20 may be coated directly with a compound coating, the fats in the compound coating may migrate into the core. To avoid this, it is preferred to protect the core material by coating it with a first binder layer 22 to provide a protective barrier to the fats in the outer compound coating layer 24.

A compound coating comprising sugar; fat; a milk powder such as whole milk powder, non-fat milk powder or whey powder; and an emulsifier, preferably lecithin, is applied as a coating to form the non-chocolate compound coating layer 24. Preferable compound coatings may be obtained from any number of chocolate suppliers as a "white" compound coating. Compound coatings are generally described in Chapter 6 of Chocolate, Cocoa, and Confectionery: Science and Technology by B. W. Minifie, 3^{rd} Edition. As noted earlier, the compound coating of the present invention is a non-chocolate compound coating. Thus, the compound coating of the present invention is substantially free of sweet chocolate, milk chocolate, buttermilk chocolate, bittersweet chocolate and chocolates defined in 21 C.F.R. § 163 and cocoa powder. A preferred, compound coating is sold under the trade name WHITE KREEMY COATING™ by The Blommer Chocolate Company, Inc., Chicago, Illinois. The compound coating material is obtained in solid form and melted at about 37.8 C (100°F) and mixed with a flavor and optionally high-intensity sweeteners, and applied in about 20-40 coating applications until the piece is increased in size by about 50-100%. As each coat is applied to the room temperature tablets, the compound coating solidifies to form a soft coating over the confectionery center. After each application, cool air may be used to accelerate the solidification of the coating. The preferred thickness of the compound coating layer will comprises about 20% to about 50% of the final product weight.

In some instances, a solid fat may be used in place of a compound coating. Suitable solid fats include triglycerides of various fatty acids, such as lauric acid, myristic acid, palmitic acid, or stearic acid. The longer the fatty acids chain length, the higher the melting point of the fat. Usually hydrogenated fats are needed since unsaturated fats have lower melting points and therefore would not give a soft-shell. Lauric acid fats are shorter in chain length and are derived from coconut and palm kernels. Non-lauric fats are longer chain fatty acids and may be derived from cocoa butter, palm oil, soybean oil and cottonseed oil. In general a suitable fat may be a combination of various fatty acid triglycerides, but should have a melting point of about 32.2C (90°F) to about 60C (140°F). Preferably, a suitable fat with a melting point of about 37.8C (100°F) to about 43.3C (110°F) should be used to give a suitable soft coating. Flavors and cooling agents may be added to the soft fat coating, which can be applied in a manner similar to the above described preferred compound coating. In addition, high-intensity sweeteners may be added to the soft fat coating, as well as small amounts of sugar or polyols to increase the firmness of the soft fat coating.

The soft-coated product may be coated directly with a hard shell layer 28. However, the fats in the compound coating layer 24 may migrate into the hard shell layer 28. To avoid this, it is preferred to protect the hard shell layer 28 with a second binder layer 26. In addition, to preventing the migration of materials between layers, the first and second binder layer 22, 26 also facilitate binding between the compound coating layer 24 and the adjacent layers. The binder layer is preferably made from solution of an 80/20 mixture of sugar and gum arabic in an about 50% to about 70%, and preferably 60%, solution and dried with powder 80/20 mixture of sugar and gum arabic. Alternatively, binder layers may be made using sugar or sorbitol for a sugarless product.

Next the hard shell layer 28 is applied. This layer may be a conventional hard shell sugar coating. If a sugarless product is desired, a hard shell coating can preferably be made from various polyols, such as sorbitol, xylitol and maltitol. In the preferred method of the present invention, a sugar solution is used, preferably one made with added modified starch to act as a binder. The coating may also include flavors and high-intensity sweeteners.

The coating is initially present as a liquid syrup which contains from about 30% to about 80% or 85% of coating ingredients and from about 15% or 20% to about 70% of a solvent such as water. A preferred coating syrup includes 70% sugar. The coating process may be carried out in conventional panning equipment. The soft coated tablets are placed into the panning equipment to form a moving mass. Early applications of the coating syrup are preferably done at room temperature to reduce melting of the soft coating, but warmer solutions may be used after the initial coats. After each coating, warm air is applied to dry the sugar coating.

The material or syrup which will eventually form the coating is applied or distributed over the center tablets. Flavors may be added before, during and after applying the syrup to the centers. Once the coating has dried to form a hard surface, additional syrup additions can be made to produce a plurality of coatings or multiple layers of coating.

After the initial applications, syrup is added to the center tablets at a temperature range of from about 37.8C (100°F). to about 115.5C (240°F.). Preferably, the syrup temperature is from about 60C (140°F.) to about 93.3C (200°F). Most preferably, the syrup temperature should be kept constant throughout the process in order to prevent the sweetener in the syrup from crystallizing. The syrup may be mixed with, sprayed upon, poured over, or added to the tablets in any way known to those skilled in the art.

Each component of the coating on the center may be applied in a single layer or in a plurality of layers. In general, a plurality of layers is obtained by applying single coats, allowing the layers to dry, and then repeating the process. The amount of solids added by each coating step depends chiefly on the concentration of the coating syrup. Any number of coats may be applied to the center tablet. Preferably, no more than about 75 coats are applied to the center. More preferably, less than about 60 coats are applied and most preferably, about 30 to about 60 coats are applied. In any event, the present invention contemplates applying an amount of syrup sufficient to yield a coated product containing about 10% to about 65% coating. The hard shell layer will generally comprise between about 20% and about 50% of the total product weight. Most preferably the coating layers provide a 33% increase in the weight of the tablet.

Those skilled in the art will recognize that in order to obtain a plurality of coated layers, a plurality of premeasured aliquots of coating syrup may be applied to the center. It is contemplated, however, that the volume of aliquots of syrup applied to the center may vary throughout the coating procedure.

Once a coating of syrup is applied to the center, the present invention contemplates drying the wet syrup in an inert medium. A preferred drying medium comprises air. Preferably, forced drying air contacts the wet syrup coating in a temperature range of from about 21C (70°F) to about 43.3C (110°F). More preferably, the drying air is in the temperature range of from about 26.6C (80°F) to about 37.8C (100°F). The invention also contemplates that the drying air possesses a relative humidity of less than about 15 percent. Preferably, the relative humidity of the drying air is less than about 8 percent.

The drying air may be passed over and admixed with the syrup coated centers in any way commonly known in the art. Preferably, the drying air is blown over and around the syrup coated centers at a flow rate, for large scale operations, of about 79.28 m³ (2800 cubic feet) per minute. If lower quantities of material are being processed, or if smaller equipment is used, lower flow rates would be used. If a flavor is applied after a syrup coating has been dried, the present invention contemplates drying the flavor with or without the use of a drying medium. Coated confections are then removed from the pan coater and allowed to dry overnight.

While it is not necessary in the present invention to include a film coating, one may be applied if desired. To produce such a film coating when desired, several applications of a film coating may be applied to the sugar coated tablets to build up a film coating layer 30. The preferred film coating is made from an aqueous mixture of hydroxypropyl starch, sodium alginate, and microcrystalline cellulose, along with mint flavors and film softeners, such as glycerin. Other types of celluloses, starches, maltodextrins, gums and film forming agents may also be used to form the final coating. Optionally, high-intensity coolants may be added to the flavor, and high-intensity sweeteners or sugar or polyols may also be added to the mixture used for film coating.

Several non-limiting examples of a coated confectionery product having a chewy confectionery center of the present invention are described below and in Table 1.

Example 1 - Coated Confectionery Product With Chewy Center

| **TABLE 1** | | |
|---|---|---|
| ***CHEWY CENTER*** | | |
| **Ingredients** | **g** | **%** |
| Sugar | 674 | 28.15% |
| Corn Syrup 42 DE | 1120 | 46.79% |
| Fruit Juice Concentrate (65-70% solids) | 180 | 7.52% |
| Water | 180 | 7.52% |
| Palm Kernal Oil | 147 | 6.14% |
| Gelatin, 250 bloom | 43.75 | 1.83% |
| Citric Acid | 25 | 1.04% |
| Malic acid | 7 | 0.29% |
| Flavoring | 6.55 | 0.28% |
| Monoglyceride | 4 | 0.17% |
| Lecithin | 4 | 0.17% |
| Colorant | 2.5 | 0.10% |
| **Total (all)** | 2393.8 | 100.0% |
| | | |

| ***COMPOUND COATING*** | | |
|---|---|---|
| **Ingredients** | **%** | |
| White Kreemy Coating™ | 98.36% | |
| Citric Acid | 0.79% | |
| Malic Acid | 0.49% | |
| Flavoring | 0.26% | |
| Colorant | 0.10% | |
| **Total (all)** | 100.0% | |
| | | |

| ***HARD-SHELL COATING*** | | |
|---|---|---|
| **Ingredients** | **%** | |
| Sugar | 68.07% | |
| Water | 27.23% | |
| Modified Starch | 4.08% | |
| Flavoring | 0.53% | |
| Colorant | 0.09% | |
| **Total (all)** | 100.0% | |

### Chewy Center Processing Instructions

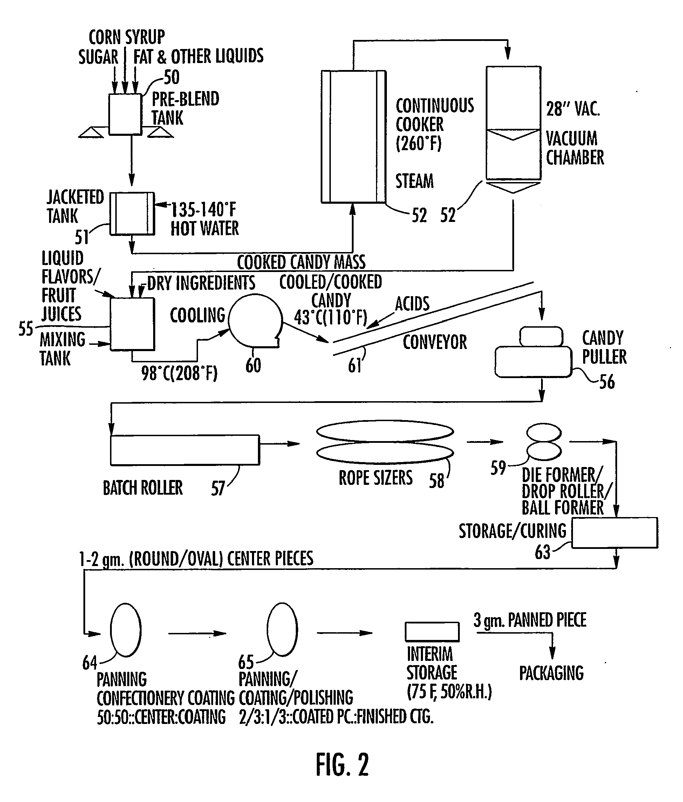

The chewy centers of Example 1 are prepared as follows, using the equipment schematic shown in Figure 2. The gelatin is dissolved in water and added to a mixer 55. Next, a syrup is made in a vacuum cooking system 52 by continuously mixing and cooking sugar, water, and the corn syrup to a temperature of about 121C -135C (250°F-275°F). As shown in Figure 2, the sugar, corn syrup and other liquids are added to preblend tank 50, cooked in a jacketed mixing kettle 51 with an agitator to a temperature of about 51.6C - 65.5C (125°F-150°F) and cooked to a final temperature of about 121C-135C (250°F-275°F) in a vacuum cooking system 52. This syrup is added to the dissolved gelatin in the mixer 55 and is blended until the mixture thickens (for about 3 minutes). The mixture is then blended at high speed until it is aerated (for about 2 minutes). Next, the mixer speed is lowered and the remaining ingredients are added to form a paste, which is mixed until homogenous (for about 2 minutes). The homogenous mixture is pumped out of the mixer by pump 60 and conveyed along conveyor 61.

The chewy centers are formed by using a puller unit 56, a batch roller 57, rope sizers 58, and/or a die former (drop roller or ball former) 59 as shown in Figure 2. The formed chewy centers may be stored in storage 63 until the compound coating is applied using compound pan coater 64.

### Compound Coating Processing Instructions

The compound coating of Table 1 comprises WHITE KREEMY COATING™ obtained from The Blommer Chocolate Company, Inc. of Chicago, Illinois. The compound coating was prepared by melting the WHITE KREEMY COATING™ at about 37.8C (100°F) and mixing with malic and citric acids, flavorings and colorants.

### Hard-Shell Coating Processing Instructions

The hard-shell outer coating comprising sugar, water, modified starch, flavors and optionally high-intensity sweeteners is prepared as follows. A modified starch solution is formed at about 80°C, and then sugar is dissolved to form a coating syrup. After the coating syrup has cooled, flavors, colorants and optionally high-intensity sweeteners are added to the coating solution. The coating syrup is applied to the centers using a pan coater 65 as shown in Figure 2. The hard-shell coated centers are removed from the coating pans, spread on trays and allowed to cool and dry overnight. The products made by Example 1 may then be packaged in that form, either by being individually wrapped or included as a plurality of pieces in a package. Optionally the products may be coated with a film coating after the hard shell coating before being wrapped.

**Example 1A A** coated confectionery product may be formed having a ratio of 1:1:1 of the chewy confectionery center to compound coating to hard-shell coating.

**Example 1B A** coated confectionery product may be formed having a ratio of 1:1:0.5 of the chewy confectionery center to compound coating to hard-shell coating.

**Example 1C A** coated confectionery product may be formed having a ratio of 1:0.5:0.5 of the chewy confectionery center to compound coating to hard-shell coating.

**Example 1D** A coated confectionery product may be formed having a ratio of 1:0.5:1 of the chewy confectionery center to compound coating to hard-shell coating.

Several non-limiting examples of a coated confectionery product having a gummy confectionery center of the present invention are described below and in Table 2.

Example 2 - Coated Confectionery Product With Gummy Center

| **TABLE 2** | | |
|---|---|---|
| ***GUMMY CENTER*** | | |
| **Ingredients** | **g** | **%** |
| Corn Syrup (High Maltose) 42 DE | 150 | 27.89% |
| Sugar | 100 | 18.59% |
| Water | 180 | 33.47% |
| Sorbitol | 29.7 | 5.52% |
| Fruit Juice Concentrate (65-70% solids) | 41 | 7.62% |
| Gelatin 200 bloom | 27 | 5.02% |
| Apple Extract Pectin | 2.7 | 0.50% |
| Citric Acid | 6 | 1.12% |
| Flavoring | 1.4 | 0.27% |
| **Total (all)** | 537.8 | 100.0% |
| | | |

| ***COMPOUND COATING*** | | |
|---|---|---|
| **Ingredients** | **%** | |
| WHITE KREEMY COATING™ | 98.36% | |
| Citric Acid | 0.78% | |
| Malic Acid | 0.49% | |
| Flavoring | 0.27% | |
| Colorant | 0.10% | |
| **Total (all)** | 100.0% | |
| | | |

| ***HARD-SHELL COATING*** | | |
|---|---|---|
| **Ingredients** | **%** | |
| Sugar | 68.07% | |
| Water | 27.23% | |
| Modified Starch | 4.08% | |
| Flavoring | 0.53% | |
| Colorant | 0.09% | |
| **Total (all)** | 100.0% | |

### Gummy Center Processing Instructions

The gummy center of Example 2 is prepared as follows. A syrup is prepared by cooking the corn syrup, sugar, 80 grams of the water and 27 grams of the sorbitol to a temperature of about 115.5C (240°F). This syrup is cooled to a temperature of about 87.7C (190°F). Meanwhile, 70 grams of water is used to dissolve the gelatin and 30 grams of water is mixed with the pectin and 2.7 grams of sorbitol. These solutions are combined and the fruit juice is added to form a second mixture. This second mixture is added slowly to the cooled syrup and mixed until a homogenous mixture is obtained. Finally, the citric acid and flavorings are added and stirred until homogenous. The resultant gummy mass is poured into starch molds, allowed to set overnight (about 24 hours) and then de-molded.

### Compound Coating Processing Instructions

The compound coating of Example 2 is prepared as described in Example 1.

### Hard-Shell Outer Coating Processing Instructions

The hard-shell outer coating of Example 2 is prepared as described in Example 1.

**Example 2A** A coated confectionery product may be formed having a ratio of 1:1:1 of the gummy confectionery center to compound coating to hard-shell coating.

**Example 2B** A coated confectionery product may be formed having a ratio of 1:1:0.5 of the gummy confectionery center to compound coating to hard-shell coating.

**Example 2C** A coated confectionery product may be formed having a ratio of 1:0.5:0.5 of the gummy confectionery center to compound coating to hard-shell coating.

**Example 2D** A coated confectionery product may be formed having a ratio of 1:0.5:1 of the gummy confectionery center to compound coating to hard-shell coating. Several non-limiting examples of a coated confectionery product having a soft confectionery center of the present invention are described below and in Table 3.

Example 3 - Coated Confectionery Product With Soft Chewy Gummy Center

| **TABLE 3** | |
|---|---|
| ***SOFT CENTER*** | |
| **Ingredients** | **%** |
| Sugar | 30% |
| Fruit Juice Concentrate (80% solids) | 15% |
| Water | 10% |
| Corn Syrup 43 DE | 2% |
| Pectin | 1% |
| Citric Acid | 0.5% |
| Sodium Citrate | 0.2% |
| Flavor | |
| **Total (all)** | 100.0% |

| ***COMPOUND COATING*** | |
|---|---|
| **Ingredients** | **%** |
| WHITE KREEMY COATING™ | 98.36% |
| Citric Acid | 0.79% |
| Malic Acid | 0.49% |
| Flavoring | 0.26% |
| Colorant | 0.10% |
| **Total (all)** | 100.0% |
| | |

| ***HARD-SHELL COATING*** | |
|---|---|
| **Ingredients** | **%** |
| Sugar | 68.07% |
| Water | 27.23% |
| Modified Starch | 4.08% |
| Flavoring | 0.53% |
| Colorant | 0.09% |
| **Total (all)** | 100.0% |

### Soft Center Processing Instructions

The soft chewy gummy centers of Example 3 are prepared as follows. A syrup is prepared by cooking the corn syrup, sugar and water to a temperature of about 115.5C (240°F). This syrup is cooled to a temperature of about 87.7C (190°F). Meanwhile, water and pectin are mixed. These solutions are combined and the fruit juice is added to form a second mixture. This second mixture is added slowly to the cooled syrup and mixed until a homogenous mixture is obtained. Finally, the citric acid, sodium citrate and flavorings are added and stirred until homogenous.

The soft chewy gummy centers are formed using starch molds. The gummy centers are allowed to set and are subsequently de-molded.

### Compound Coating Processing Instructions

The compound coating of Example 3 is prepared as described in Example 1.

### Hard-Shell Outer Coating Processing Instructions

The hard-shell outer coating of Example 3 is prepared as described in Example 1.

**Example 3A** A coated confectionery product may be formed having a ratio of 0.5:0.5:0.5 of the soft confectionery center to compound coating to hard-shell coating.

**Example 3B** A coated confectionery product may be formed having a ratio of 0.5:1:1 of the soft confectionery center to compound coating to hard-shell coating.

**Example 3C** A coated confectionery product may be formed having a ratio of 0.5:0.5:1 of the soft confectionery center to compound coating to hard-shell coating.

**Example 3D** A coated confectionery product may be formed having a ratio of 0.5:1:0.5 of the soft confectionery center to compound coating to hard-shell coating.

Several non-limiting examples of a coated confectionery product having a pressed chewy center of the present invention are described below and in Table 4.

Example 4 - Triple Coated Confectionery Product With Pressed Chewy Center

| **TABLE 4** | | |
|---|---|---|
| ***PRESSED CHEWY CENTER*** | | |
| **Ingredients** | | **%** |
| Powder (lumpy) Mixture comprising: | | 84.70% |
| | Sugar (55.13%) | |
| | Corn Syrup 39 DE at 45 Be' (41.35%) | |
| | Fully Hydrogenated Cottonseed Oil (1.76%) | |
| | Partially Hydrogenated Vegetable Oil (1.76%) | |
| Agglomerated Dextrose | | 10.16% |
| Magnesium Stearate | | 0.93% |
| Silicon Dioxide | | 0.25% |
| Flavoring | | 0.22% |
| Flavor Beads | | 3.73% |
| | **Total (all)** | 100.0% |

| ***COMPOUND COATING*** | | |
|---|---|---|
| **Ingredients** | **%** | |
| WHITE KREEMY COATING™ | 98.36% | |
| Citric Acid | 0.79% | |
| Malic Acid | 0.49% | |
| Flavoring | 0.26% | |
| Colorant | 0.10% | |
| **Total (all)** | 100.0% | |
| | | |

| ***HARD-SHELL COATING*** | | |
|---|---|---|
| **Ingredients** | **%** | |
| Sugar | 68.07% | |
| Water | 27.23% | |
| Modified Starch | 4.08% | |
| Flavoring | 0.53% | |
| Colorant | 0.09% | |
| **Total (all)** | 100.0% | |

### Pressed Chewy Center Processing Instructions

The pressed chewy center of Example 4 is prepared as follows. A powder mixture is prepared by adding 55.13% sugar, 41.35% corn syrup, 1.76% fully hydrogenated cottonseed oil and 1.76% partially hydrogenated vegetable oil in a plough-type shear mixer and heating the mixer to about 132.2C (270°F). When the final product temperature in the mixer is about 87.7C (190°F), the mixture is removed, cooled and ground. After grinding, the powder mixture is added to a dry powder blender and the remaining ingredients are added. The pressed chewy centers are formed by pressing the powder blended mixture into tablets.

### Compound Coating Processing Instructions

The compound coating of Example 4 is prepared as described in Example 1.

### Hard-Shell Outer Coating Processing Instructions

The hard-shell outer coating of Example 4 is prepared as described in Example 1.

**Example 4A** A coated confectionery product may be formed having a ratio of 1:1:1 of the pressed chewy confectionery center to compound coating to hard-shell coating.

**Example 4B** A coated confectionery product may be formed having a ratio of 1:1:0.5 of the pressed chewy confectionery center to compound coating to hard-shell coating.

**Example 4C** A coated confectionery product may be formed having a ratio of 1:0.5:0.5 of the pressed chewy confectionery center to compound coating to hard-shell coating.

**Example 4D** A coated confectionery product may be formed having a ratio of 1:0.5:1 of the pressed chewy confectionery center to compound coating to hard-shell coating.

### Additional Examples not in accordance with the invention - non-chewy centers:

### Mint Tablets

The following tablet center compositions in percentages may be made:

| | Example 5 | Example 6 | Example 7 | Example 8 | Example 9 | Example 10 |
|---|---|---|---|---|---|---|
| Sorbitol | 97.08 | 48.99 | 48.75 | 48.95 | 48.70 | 48.86 |
| Sugar | - | 48.99 | 48.75 | 48.95 | 48.70 | 48.86 |
| Magnesium stearate | 1.01 | 0.75 | 0.50 | 0.50 | 0.50 | 0.50 |
| Silicon Dioxide | - | - | 0.25 | 0.18 | 0.25 | 0.24 |
| Acesulfame K | 0.39 | - | - | - | - | - |
| Aspartame | 0.19 | - | - | - | - | - |
| SD Flavor* | - | - | - | - | 0.27 | - |
| Flavor** | 0.76 | 0.72 | 0.90 | 0.55 | 0.63 | 1.25 |
| Menthol | 0.26 | 0.25 | 0.15 | 0.15 | 0.20 | - |
| Coolant | 0.31 | 0.30 | 0.70 | 0.72 | 0.75 | 0.29 |
| Total | 100.0 | 100.0 | 100.0 | 100.0 | 100.0 | 100.0 |
| Tablet weight | 0.35 grams | 0.35 grams | 0.25 grams | 0.25 grams | 0.25 grams | 0.25 grams |

* Spray dried cinnamon flavor is used in Example 9.

** Peppermint flavor is used in Examples 5-8 and 10, and cinnamon flavor is used in Example 9.

Similar type sugarless tablet centers can be made according to the following formulas:

| | Example 11 | Example 12 | Example 13 |
|---|---|---|---|
| Sorbitol | 97.08 | - | 96.89 |
| Xylitol | | 97.78 | - |
| Magnesium stearate | 1.01 | 0.50 | 1.01 |
| Silicon Dioxide | - | - | 0.19 |
| Acesulfame K | 0.39 | 0.39 | 0.39 |
| Aspartame | 0.19 | - | 0.19 |
| Peppermint Flavor | 0.76 | 0.76 | 0.76 |
| Menthol | 0.26 | 0.26 | 0.26 |
| Coolant | 0.31 | 0.31 | 0.31 |
| Total | 100.0 | 100.0 | 100.0 |
| Tablet weight | 0.25 grams | 0.25 grams | 0.25 grams |

### Soft Coating:

For Example 5-10, the tablets are coated with a sugar/gum arabic solution at a ratio of 80/20 and at a solids level of 60%. The 80/20 powdered sugar/gum arabic is then used to dry charge the wet tablets and dry the sugar/gum arabic coating. This is used as a seal coat between the tablet layer and compound coating layer, and to act as an adhesive for the compound coating.

The above tablets for Examples 5 and 6 are then coated with a compound coating comprising sugar, vegetable oil, non-fat milk solids, lecithin, titanium dioxide, and vanilla. This material can be obtained from Bloomer Chocolate Co. as "Kreemy White Coating." A different compound coating, using whey powder instead of non-fat milk solids, is used to coat the tablets of Examples 7-10. In each case, the compound coating is melted and the flavors, coolants, and high-intensity sweeteners are added to the coating mixture according to the following compositions:

| | Example 5 | Example 6 | Example 7 | Example 8 | Example 9 | Example 10 |
|---|---|---|---|---|---|---|
| Compound coating* | 96.09 | 98.00 | 98.03 | 96.60 | 98.23 | 98.62 |
| Flavor** | 2.39 | 1.20 | 1.18 | 2.60 | 1.18 | 1.00 |
| Menthol | 0.16 | 0.20 | 0.10 | 0.15 | - | - |
| Coolant | 0.86 | 0.60 | 0.69 | 0.65 | 0.59 | 0.38 |
| Acesulfame K | 0.25 | - | - | - | - | - |
| Aspartame | 0.25 | - | - | - | - | - |
| Total | 100.0 | 100.0 | 100.0 | 100.0 | 100.0 | 100.0 |
| Piece weight | 0.70 grams | 0.70 grams | 0.40 grams | 0.40 grams | 0.40 grams | 0.45 grams |

*Non-fat milk powder is used in Examples 5 and 6; whey powder is used in Examples 7-10.

**Peppermint flavor is used in Examples 5-8 and 10; cinnamon flavor is used in Example 9.

For Examples 10-13, the tablets can be coated with the sorbitol/gum arabic solution at a ratio of 80/20 at a solids level of 60%. The 80/20 powdered sorbitol/gum arabic would then be used to dry charge the wet tablets and dry the coating to give a seal coat between the tablet layer and the next coating layer. These tablets can then be coated with a solid fat having a melting point of 110°F (Ex. 11) or a compound coating made with xylitol (Ex. 12) or sorbitol (Ex. 13) in place of the sugar used to make typical compound coatings. Sweeteners and flavors can be added, resulting in the following formulas for the first coating layer in a sugarless product:

| | Example 11 | Example 12 | Example 13 |
|---|---|---|---|
| Compound Coating | - | 96.09 | 96.09 |
| Fat | 96.09 | - | - |
| Peppermint Flavor | 2.39 | 2.39 | 2.39 |
| Menthol | 0.16 | 0.16 | 0.16 |
| Coolant | 0.86 | 0.86 | 0.86 |
| Acesulfame K | 0.25 | 0.25 | 0.25 |
| Aspartame | 0.25 | 0.25 | 0.25 |
| Total | 100.0 | 100.0 | 100.0 |
| Piece weight | 0.40 grams | 0.40 grams | 0.40 grams |

This gives a tablet with a soft coating that contains mint flavors and coolants. Again, the soft-coated tablets are then coated with the sugar/gum arabic solution at a ratio of 80/20 at a solids level of 60%. The 80/20 powdered sugar/gum arabic is again used to dry charge the wet tablets and dry the sugar/gum arabic coating. This is used as a seal coat between the compound coating layer and the next sugar-coating layer. For Examples 11-13, a sorbitol/gum arabic mixture is used between the soft coating and the hard shell coating. Again this is used to seal the soft coating from the hard coating and act as an adhesive for the following coats.

### Hard Shell Coating:

For Examples 5-10, the soft coated tablets are then coated with a hard shell sugar coating comprising sugar, starch, flavors, coolants, and optionally high-intensity sweeteners: A modified starch solution is formed at 80C°, then sugar is dissolved to form the coating syrup, and sugar syrup containing color is added. In Example 11, a sorbitol solution with gum arabic may be used to give a hard shell coating, whereas xylitol with gum arabic can be used to give the hard shell coating in Example 12. Maltitol may be used to give a hard shell coating in Example 13. The coating solution is cooled and high-intensity sweeteners are added. Flavors blended with coolants are added in several applications after the coating syrup is applied and before it is dried. Compositions of the coating mixtures used to form the second (hard shell) coating are shown in the following tables:

| | Example 5 | Example 6 | Example 7 | Example 8 | Example 9 | Example 10 |
|---|---|---|---|---|---|---|
| Sugar | 91.70 | 92.34 | 91.24 | 90.40 | 92.92 | 92.58 |
| Starch | 5.50 | 5.54 | 5.47 | 5.43 | 5.58 | 5.55 |
| Flavor* | 1.35 | 1.29 | 1.37 | 1.80 | 1.39 | 1.48 |
| Coolant | 0.85 | 0.83 | 0.11 | 0.11 | 0.11 | 0.39 |
| Sweeteners | 0.60 | - | - | - | - | - |
| Color syrup | - | - | 1.81 | 2.26 | - | - |
| Total | 100.0 | 100.0 | 100.0 | 100.0 | 100.0 | 100.0 |
| Piece weight | 0.95 grams | 0.95 grams | 0.60 grams | 0.60 grams | 0.60 grams | 0.65 grams |

| | | | | | | |
|---|---|---|---|---|---|---|
| *Peppermint flavor is used in Examples 5-8 and 10; cinnamon flavor is used in Example 9. | | | | | | |

| | Example 11 | Example 12 | Example 13 |
|---|---|---|---|
| Sorbitol | 95.70 | - | - |
| Xylitol | - | 91.70 | - |
| Maltitol | - | - | 93.70 |
| Gum Arabic | 1.50 | 5.80 | 3.50 |
| Peppermint Flavor | 1.35 | 1.35 | 1.35 |
| Coolant | 0.85 | 0.85 | 0.85 |
| Intense Sweeteners | 0.60 | 0.30 | 0.60 |
| Total | 100.0 | 100.0 | 100.0 |
| Piece weight | 0.60 grams | 0.60 grams | 0.60 grams |

Hard shell coated tablets are removed from the coating pans, spread on trays and allowed to cool and dry overnight. The examples are then packaged, either by being individually wrapped, or included in a package as a group of products.

If a film coating is desired an these products, the following may be used.

### Film Coating:

The film coatings are prepared by dry blending the film forming agents of hydroxypropyl (HP) starch, sodium alginate, and microcrystalline cellulose and mixing the blend into water at a ratio of about 7:1 water: film formers. The resulting mixture is heated to about 80°C to dissolve and disperse the film formers. The solution is then cooled, and glycerin, flavor and optionally high-intensity sweeteners or some sugar may be added to form a thick suspension. The materials may be blended together and formed into a viscous suspension by high shear mixing. Two applications of the suspension is applied to the hard shell coated product, and dried to about 10% moisture after each application. The film coating applications add about 0.1% to about 1% to the weight of the product, but give it a smooth surface and a shine. The following compositions are used for the film coating of the examples:

| | Example 5 | Example 6 | Example 7 | Example 8 | Example 9 | Example 10 |
|---|---|---|---|---|---|---|
| Flavor* | 37.80 | 37.80 | 38.79 | 39.90 | 43.11 | 53.12 |
| Menthol | 4.20 | 4.20 | 4.31 | 4.43 | - | - |
| HP starch | 34.23 | 34.23 | 34.97 | 34.23 | 34.97 | 21.55 |
| Alginate | 15.00 | 15.00 | 20.59 | 15.00 | 15.32 | 9.44 |
| Glycerin | 5.11 | 5.11 | - | 5.11 | 5.27 | 3.25 |
| Acesulfame K | 1.55 | 1.55 | - | - | - | 11.81** |
| Aspartame | 0.78 | 0.78 | - | - | - | |
| Cellulose | 1.33 | 1.33 | 1.34 | 1.33 | 1.33 | 0.83 |
| Total | 100.0 | 100.0 | 100.0 | 100.0 | 100.0 | 100.0 |

* Peppermint flavor is used in Examples 5-8 and 10, cinnamon flavor is used in Example 9.

** Sugar is used as a sweetener in place of high-intensity sweeteners in Example 10.

For Examples 11-13, any one of the film compositions shown above may be used to give a film coating on these examples.

It should be appreciated that the method and products of the present invention are capable of being incorporated in the form of a variety of embodiments, only a few of which have been illustrated and described above. For example, fruit flavors may be used instead of the mint and cinnamon flavors in the examples. The invention may be embodied in other forms. The described embodiments are to be considered in all respects only as illustrative and not restrictive, and the scope of the invention is, therefore, indicated by the appended claims rather than by the foregoing description.

## Claims

1. A coated confectionery product comprising:
a chewy confectionery center being a manmade, non-chocolate, candy center or composition, with the proviso that dried fruits, nuts, coffee beans, starch based products namely puffed or flaked cereals, cookies or biscuits, are not included in the term confectionary center;
a first non-chocolate, fat containing compound coating surrounding the confectionery center; and
a second coating surrounding the first coating and comprising a hard shell made from one or more sugars, polyols, high intensity sweeteners and mixtures thereof;
a first binder coating between the confectionary center and the first coating; and
a second binder coating between the first and second coating; the binder coatings comprising a binder.

2. The confectionery product of claim 1 wherein said confectionery center and/or said first coating and/or said second coating constitutes from 20% to 50% by weight of the confectionery product.

3. The confectionery product of claim 1 or claim 2 wherein said confectionery center comprises a fruit juice concentrate having solids concentration of from 65% to 70% or 80%.

4. The confectionery product of any one of claims 1 to 3 wherein said confectionery center comprises gelatin.

5. The confectionery product of claim 4 wherein said gelatin constitutes from 1% to 2% of the confectionery center.

6. The confectionery product of claim 1 or 5 wherein said confectionery center is a gummy confectionery center.

7. The confectionery product of claim 6 wherein said confectionery centre further comprises pectin.

8. The confectionery product of claim 7 wherein said pectin constitutes about 2% by weight of the confectionery center.

9. The confectionery product of claim 1 to 8 wherein said confectionery center is a pressed chewy confectionery center.

10. The confectionery product of anyone of claims 1 to 9 wherein said confectionery center comprises sugar, corn syrup and fat.

11. The confectionery product of claim 10 wherein said sugar constitutes from 50% to 60%, said corn sugar constitutes from 30% to 40% and said fat constitutes from 1% to 5% by weight of the confectionery center.

12. The confectionery product of any one of claims 1 to 8 wherein said confectionery center is a soft chewy gummy confectionery center.

13. The confectionery product of any one of claims 1 to 12 wherein said confectionery center constitutes from 33% to 50% by weight of the confectionery product.

14. The confectionery product of any one of claims 1 to 12 wherein said confectionery center constitutes from 20% to 33% by weight of the confectionery product.

15. The confectionery product of any one of claims 1 to 14 wherein said first coating constitutes from 20% to 40% by weight of the confectionery product.

16. The confectionery product of any one of claims 1 to 14 wherein said first coating constitutes from 25% to 50% by weight of the confectionery product.

17. The confectionery product of any one of claims 1 to 16 wherein said second coating constitutes from 20% to 40% by weight of the confectionery product.

18. The confectionery product of any one of claims 1 to 16 wherein said second coating constitutes from 25% to 50% by weight of the confectionery product.

19. The confectionery product of claim 1 wherein said binder coating further comprises a sweetener and said binder is selected from the group consisting of natural gums, hydrocolloids and mixtures thereof.

20. The confectionery product of claim 19 wherein said sweetener is selected from the group consisting of sugars, polyols, high intensity sweeteners and mixtures thereof.

21. The confectionery product of claim 1 wherein said compound coating comprises a sweetener, said fat, a milk powder and an emulsifier.

22. The confectionery product of claim 21 wherein said milk powder is selected from the group consisting of whole milk powder, non-fat milk powder, whey powder and mixtures thereof.

23. The confectionery product of claim 21 or 22 wherein said sweetener is selected from the group consisting of sucrose, sorbitol and mixtures thereof.

24. The confectionery product of any one of the preceding claims wherein said hard shell coating is made from a sugar selected from the group consisting of sucrose, dextrose, maltose and mixtures thereof.

25. The confectionery product of any one of claims 1 to 23 wherein said hard shell coating is made from a polyol selected from the group consisting of sorbitol, maltitol, xylitol, hydrogenated isomaltulose, lactitol, erythritol and mixtures thereof.

26. The confectionery product of any one of claims 1 to 25 comprising:
a first binder coating covering said confectionery center;
said first coating surrounding the first binder coating wherein said first coating comprises a compound coating, the compound coating comprising:
i) a fat;
ii) a milk powder;
iii) a sweetener selected from the group consisting of sucrose, sorbitol and mixtures thereof; and
iv) an emulsifier;
a second binder coating covering said first coating; and
said hard-shell coating surrounding the second binder coating.

27. The confectionery product of claim 26 wherein the confectionery center is a chewy confectionery center comprising fat in an amount of from 4% to 10% by weight of the chewy confectionery center and gelatin in an amount of from 1% to 2% by weight of the chewy confectionery center.

28. The confectionery product of claim 26 wherein the confectionery center is a gummy confectionery center comprising pectin in an amount of about 0.5% to about 1% and gelatin in an amount of from 4% to 8% by weight of the gummy confectionery center.

29. The confectionery product of claim 26 wherein the confectionery center is a soft chewy gummy confectionery center comprising pectin in an amount of about 2% by weight of the soft confectionery center.

30. The confectionery product of claim 26 wherein the confectionery center is a pressed chewy confectionery center comprising sugar in an amount of from 50% to 60%, said corn syrup in the amount of from 30% to 40% and said fat in an amount of from 1% to 5% by weight of the pressed chewy confectionery center.

31. The confectionery product of any one of claims 26 to 30 wherein said first and second binder coatings comprise:
a sweetener selected from the group consisting of sugar, sorbitol and mixtures thereof; and
a binder selected from the group consisting of gum arabic, modified starch and mixtures thereof.

32. The confectionery product according to any one of claims 1 to 31 wherein said confectionery center is chewy and has a water content of greater than 3%.

33. The confectionery product of claim 32 wherein the water content of the chewy center is from 5% and 14%.

34. The confectionery product of any one of the preceding claims wherein said second coating is the outermost coating of the product.

35. The confectionery product of any one of the preceding claims 1 to 33 further comprising a third coating covering the second coating, the third coating comprising a film comprising film forming agents.

36. The confectionery product of claim 35 wherein the film forming agents are selected from the group consisting of celluloses, starches, maltodextrins, gums and mixtures thereof.

37. The confectionery product of any one of claims 1 to 36 in which a plurality of coated products are wrapped by a wrapping or in which a plurality of coated products are individually wrapped.

38. A method of producing a coated confectionery product as defined in any one of the preceding claims comprising the steps of:
providing a chewy confectionery center;
forming a first binder coating over the confectionery center
forming the first coating over the first binder;
forming a second binder coating over the first coating
forming the second coating over the second binder.

39. A method as defined in claim 38 of producing the coated confectionery product comprising the steps of:
providing a confectionery center;
forming a first binder coating over the confectionery center by applying a binder solution having a solids level of from 50% to 70% over the confectionery center and then applying a powdered binder mixture to dry charge the confectionery center;
forming a compound coating over the first binder coating by applying multiple coats of a molten compound coating over the confectionery center, while cooling between coats to solidify the compound coating;
forming a second binder coating over the compound coated confectionery center by applying at least one layer of a binder solution having a solids level of from 50% to 70% over the compound coated confectionery center and then applying a powdered binder mixture to dry charge the compound coated confectionery center;
applying a hard-shell coating over the second binder coating by panning the coated confectionery center by applying multiple coats of a panning syrup comprising a sugar, a polyol or mixtures thereof; and
optionally applying a film coating over the hard-shell coating by applying multiple coats of a syrup containing one or more film forming agents.

## Patentansprüche

1. Ein überzogenes Süßwarenprodukt bestehend aus:
einer hergestellten, nicht schokoladenhaltigen Kaubonbonfüllung, wobei der Begriff Kaubonbonfüllung nicht Trockenobst, Nüsse, Kaffeebohnen, auf Stärke basierende Produkte wie Puffreis oder Haferflocken, Kekse oder Plätzchen umfasst;
einer ersten Beschichtung um die Kaubonbonfüllung herum, bestehend aus einer nicht schokoladenhaltigen Fettglasur; und
einer zweiten Beschichtung um die erste Beschichtung herum, bestehend aus einer hartschaligen Außenschicht aus einem oder mehreren Zuckern, Polyolen, hoch intensiven Süßstoffen und Mischungen davon;
einer ersten Bindebeschichtung zwischen der Kaubonbonfüllung und der ersten Beschichtung; und
einer zweiten Bindebeschichtung zwischen der ersten und der zweiten Beschichtung, wobei die Bindebeschichtungen ein Bindemittel enthalten.

2. Das Süßwarenprodukt nach Anspruch 1, wobei die besagte Kaubonbonfüllung und/oder die besagte erste Beschichtung und/oder die besagte zweite Beschichtung 20-50 % des Gewichts des Süßwarenprodukts ausmachen.

3. Das Süßwarenprodukt nach Anspruch 1 oder 2, wobei die besagte Kaubonbonfüllung ein Fruchtsaftkonzentrat mit einem Feststoffanteil von 65-70 % bzw. 80 % enthält.

4. Das Süßwarenprodukt nach einem der voranstehenden Ansprüche 1 bis 3, wobei die besagte Kaubonbonfüllung Gelatine enthält.

5. Das Süßwarenprodukt nach Anspruch 4, wobei die besagte Gelatine 1-2 % der Kaubonbonfüllung ausmacht.

6. Das Süßwarenprodukt nach Anspruch 1 oder 5, wobei die besagte Kaubonbonfüllung eine Kaugummifüllung ist.

7. Das Süßwarenprodukt nach Anspruch 6, wobei die besagte Kaubonbonfüllung weiterhin Pektin enthält.

8. Das Süßwarenprodukt nach Anspruch 7, wobei das besagte Pektin etwa 2 % des Gewichts der Kaubonbonfüllung ausmacht.

9. Das Süßwarenprodukt nach einem der voranstehenden Ansprüche 1 bis 8, wobei die besagte Kaubonbonfüllung eine gepresste Kaubonbonfüllung ist.

10. Das Süßwarenprodukt nach einem der voranstehenden Ansprüche 1 bis 9, wobei die besagte Kaubonbonfüllung Zucker, Maissirup und Fett enthält.

11. Das Süßwarenprodukt nach Anspruch 10, wobei der besagte Zucker 50-60 %, der besagte Maissirup 30-40 % und das besagte Fett 1-5 % des Gewichts der Kaubonbonfüllung ausmachen.

12. Das Süßwarenprodukt nach einem der voranstehenden Ansprüche 1 bis 8, wobei die besagte Kaubonbonfüllung eine weiche Kaugummifüllung ist.

13. Das Süßwarenprodukt nach einem der voranstehenden Ansprüche 1 bis 12, wobei die besagte Kaubonbonfüllung 33-50 % des Gewichts des Süßwarenprodukts ausmacht.

14. Das Süßwarenprodukt nach einem der voranstehenden Ansprüche 1 bis 12, wobei die besagte Kaubonbonfüllung 20-33 % des Gewichts des Süßwarenprodukts ausmacht.

15. Das Süßwarenprodukt nach einem der voranstehenden Ansprüche 1 bis 14, wobei die besagte erste Beschichtung 20-40 % des Gewichts des Süßwarenprodukts ausmacht.

16. Das Süßwarenprodukt nach einem der voranstehenden Ansprüche 1 bis 14, wobei die besagte erste Beschichtung 25-50 % des Gewichts des Süßwarenprodukts ausmacht.

17. Das Süßwarenprodukt nach einem der voranstehenden Ansprüche 1 bis 16, wobei die besagte zweite Beschichtung 20-40 % des Gewichts des Süßwarenprodukts ausmacht.

18. Das Süßwarenprodukt nach einem der voranstehenden Ansprüche 1 bis 16, wobei die besagte zweite Beschichtung 25-50 % des Gewichts des Süßwarenprodukts ausmacht.

19. Das Süßwarenprodukt nach Anspruch 1, wobei die besagte Bindebeschichtung weiter einen Süßstoff enthält und das besagte Bindemittel aus der Gruppe bestehend aus natürlichen Gummis, Hydrocolloiden und Mischungen davon ausgewählt ist.

20. Das Süßwarenprodukt nach Anspruch 19, wobei der besagte Süßstoff aus der Gruppe bestehend aus Zuckern, Polyolen, hoch intensiven Süßstoffen und Mischungen davon ausgewählt ist.

21. Das Süßwarenprodukt nach Anspruch 1, wobei die besagte Fettglasur einen Süßstoff, das besagte Fett, ein Milchpulver und einen Emulgator enthält.

22. Das Süßwarenprodukt nach Anspruch 21, wobei das besagte Milchpulver aus der Gruppe bestehend aus Vollmilchpulver, fettarmem Milchpulver, Molkenpulver und Mischungen davon ausgewählt ist.

23. Das Süßwarenprodukt nach Anspruch 21 oder 22, wobei der besagte Süßstoff aus der Gruppe bestehend aus Sucrose, Sorbitol und Mischungen davon ausgewählt ist.

24. Das Süßwarenprodukt nach einem der voranstehenden Ansprüche, wobei die besagte hartschalige Außenschicht aus einem Zucker besteht, der aus der Gruppe bestehend aus Sucrose, Dextrose, Maltose und Mischungen davon ausgewählt ist.

25. Das Süßwarenprodukt nach einem der voranstehenden Ansprüche 1 bis 23, wobei die besagte hartschaligen Außenschicht aus einem Polyol besteht, das aus der Gruppe bestehend aus Sorbitol, Maltitol, Xylitol, hydrogenierter Isomaltulose, Lactitol, Erythritol und Mischungen davon ausgewählt ist.

26. Das Süßwarenprodukt nach einem der voranstehenden Ansprüche 1 bis 25, bestehend aus:
einer ersten Bindebeschichtung um die besagte Kaubonbonfüllung herum;
der besagten ersten Beschichtung um die erste Bindebeschichtung herum, wobei die besagte erste Beschichtung eine Fettglasur umfasst, die sich aus folgenden Bestandteilen zusammensetzt:
i) einem Fett;
ii) einem Milchpulver;
iii) einem Süßstoff, der aus der Gruppe bestehend aus Sucrose, Sorbitol und Mischungen davon ausgewählt ist; und
iv) einem Emulgator;
einer zweiten Bindebeschichtung um die besagte erste Beschichtung herum; und
der besagten hartschaligen Außenschicht um die zweite Bindebeschichtung herum.

27. Das Süßwarenprodukt nach Anspruch 26, wobei die Kaubonbonfüllung 4-10 % Fett und 1-2 % Gelatine enthält.

28. Das Süßwarenprodukt nach Anspruch 26, wobei die Kaugummifüllung 0,5-1 % Pektin und 4-8 % Gelatine enthält.

29. Das Süßwarenprodukt nach Anspruch 26, wobei die Kaubonbonfüllung eine weiche Kaugummifüllung ist, die etwa 2 % Pektin enthält.

30. Das Süßwarenprodukt nach Anspruch 26, wobei die Kaubonbonfüllung eine gepresste Kaubonbonfüllung ist, die 50-60 % Zucker, 30-40 % des besagten Maissirups und 1-5 % des besagten Fetts enthält.

31. Das Süßwarenprodukt nach einem der voranstehenden Ansprüche 26 bis 30, wobei sich die besagten ersten und zweiten Bindebeschichtungen aus folgenden Bestandteilen zusammensetzen:
einem Süßstoff, der aus der Gruppe bestehend aus Sucrose, Sorbitol und Mischungen davon ausgewählt ist; und
einem Bindemittel, das aus der Gruppe bestehend aus Gummi Arabicum, modifizierter Stärke und Mischungen davon ausgewählt ist.

32. The Süßwarenprodukt nach einem der voranstehenden Ansprüche 1 bis 31, wobei die besagte Kaubonbonfüllung kaubar ist und der Wasseranteil der Kaubonbonfüllung mehr als 3 % beträgt.

33. Das Süßwarenprodukt nach Anspruch 32, wobei der Wasseranteil der Kaubonbonfüllung 5-14 % beträgt.

34. Das Süßwarenprodukt nach einem der voranstehenden Ansprüche, wobei die besagte zweite Beschichtung die äußerste Schicht des Süßwarenprodukts darstellt.

35. Das Süßwarenprodukt nach einem der voranstehenden Ansprüche 1 bis 33, weiter bestehend aus einer dritten Beschichtung um die zweite Beschichtung herum, wobei die dritte Beschichtung eine aus schichtformenden Mitteln zusammengesetzte Schicht umfasst.

36. Das Süßwarenprodukt nach Anspruch 35, wobei die schichtformenden Mittel aus der Gruppe bestehend aus Cellulosen, Stärken, Maltodextrinen, Gummis und Mischungen davon ausgewählt sind.

37. Das Süßwarenprodukt nach einem der voranstehenden Ansprüche 1 bis 36, wobei eine Vielzahl von überzogenen Produkten zusammen oder individuell in Bonbonpapier eingewickelt ist.

38. Eine Methode zur Herstellung eines überzogenen Süßwarenprodukts nach einem der voranstehenden Ansprüche, bestehend aus den Schritten:
Bereitstellung einer Kaubonbonfüllung;
Ummantelung der Kaubonbonfüllung mit einem ersten Bindemittel;
Ummantelung des ersten Bindemittels mit einer ersten Beschichtung;
Ummantelung der ersten Beschichtung mit einem zweiten Bindemittel; und
Ummantelung des zweiten Bindemittels mit einer zweiten Beschichtung.

39. Die Methode nach Anspruch 38 zur Herstellung des überzogenen Süßwarenprodukts, bestehend aus den Schritten:
Bereitstellung einer Kaubonbonfüllung;
Ummantelung der Kaubonbonfüllung mit einer ersten Bindebeschichtung durch Auftragen einer Bindelösung mit einem Feststoffanteil von 50-70 % auf die Kaubonbonfüllung, gefolgt vom Auftragen einer Pulver-Bindemischung zur Trocknung der Kaubonbonfüllung;
Ummantelung der ersten Bindebeschichtung mit einer Fettglasur durch Auftragen mehrerer Lagen einer geschmolzenen Fettglasur auf die Kaubonbonfüllung und Kühlung der einzelnen Lagen vor dem Auftragen der nächsten Lage, damit die Fettglasur hart wird;
Ummantelung der Fettglasur mit einer zweiten Bindebeschichtung auf der fettglasur-überzogenen Kaubonbonfüllung durch Auftragen von mindestens einer Lage einer Bindelösung mit einem Feststoffanteil von 50-70 % auf die fettglasur-überzogene Kaubonbonfüllung, gefolgt vom Auftragen einer Pulver-Bindemischung zur Trocknung der fettglasur-überzogenen Kaubonbonfüllung;
Aufbringung einer hartschaligen Außenschicht auf die zweite Bindebeschichtung durch mehrmaliges Eintauchen der überzogenen Kaubonbonfüllung in einen Sirup bestehend aus einem Zucker, einem Polyol oder Mischungen davon; und
wahlweise Aufbringung einer dünnen Schicht auf die hartschalige Außenschicht durch Auftragen mehrerer Lagen eines Sirups bestehend aus einem oder mehreren schichtbildenden Mitteln.

## Revendications

1. Un produit de confiserie enrobé, comprenant :
un coeur moelleux consistant en un coeur ou une composition de confiserie artificielle non chocolaté, à l'exclusion toutefois, dans l'expression coeur moelleux, de fruits secs, arachides, grains de café, produits à base d'amidon, à savoir des céréales soufflées ou en flocons ou des biscuits ;
un premier enrobage non chocolaté et contenant des matières grasses, entourant le coeur du produit de confiserie ; et
un deuxième enrobage entourant le premier enrobage, et comprenant une coque dure composée d'un ou plusieurs sucres, polyols, édulcorants à haute intensité, et mélanges de ces derniers ;
une première couche de liant entre le coeur du produit de confiserie et le premier enrobage ; et
une deuxième couche de liant entre les premier et deuxième enrobages, les couches de liants comprenant un liant.

2. Le produit de confiserie selon la revendication 1, dans lequel ledit coeur du produit de confiserie et/ou ledit premier enrobage et/ou ledit deuxième enrobage représentent de 20% à 50% en poids du produit de confiserie.

3. Le produit de confiserie selon la revendication 1 ou la revendication 2, dans lequel ledit coeur du produit de confiserie comprend un jus de fruit concentré comprenant une concentration de matières solides allant de 65% à 70% ou 80%.

4. Le produit de confiserie selon une quelconque des revendications 1 à 3, dans lequel ledit coeur comprend de la gélatine.

5. Le produit de confiserie selon la revendication 4, dans lequel ladite gélatine représente de 1 % à 2% du coeur du produit de confiserie.

6. Le produit de confiserie selon la revendication 1 ou 5, dans lequel ledit coeur du produit de confiserie est un coeur caoutchouteux.

7. Le produit de confiserie selon la revendication 6, dans lequel ledit coeur du produit de confiserie comprend également de la pectine.

8. Le produit de confiserie selon la revendication 7, dans lequel ladite pectine représente environ 2% en poids du coeur du produit de confiserie.

9. Le produit de confiserie selon les revendications 1 à 8, dans lequel ledit coeur du produit de confiserie est un coeur moelleux pressé.

10. Le produit de confiserie selon une quelconque des revendications 1 à 9, dans lequel le coeur comprend du sucre, du sirop de maïs, et des matières grasses.

11. Le produit de confiserie selon la revendication 10, dans lequel ledit sucre représente de 50% à 60%, ledit sucre de maïs de 30% à 40%, et lesdites matières grasses de 1% à 5% en poids du coeur du produit de confiserie.

12. Le produit de confiserie selon une quelconque des revendications 1 à 8, dans lequel ledit coeur est un coeur caoutchouteux moelleux de produit de confiserie.

13. Le produit de confiserie selon une quelconque des revendications 1 à 12, dans lequel ledit coeur de produit de confiserie représente de 33% à 50% en poids du produit de confiserie.

14. Le produit de confiserie selon une quelconque des revendications 1 à 12, dans lequel ledit coeur de produit de confiserie représente de 20% à 33% en poids du produit de confiserie.

15. Le produit de confiserie selon une quelconque des revendications 1 à 14, dans lequel ledit premier enrobage représente de 20% à 40% en poids du produit de confiserie.

16. Le produit de confiserie selon une quelconque des revendications 1 à 14, dans lequel ledit premier enrobage représente de 20% à 50% en poids du produit de confiserie.

17. Le produit de confiserie selon une quelconque des revendications 1 à 16, dans lequel ledit deuxième enrobage représente de 20% à 40% en poids du produit de confiserie.

18. Le produit de confiserie selon une quelconque des revendications 1 à 16, dans lequel ledit deuxième enrobage représente de 25% à 50% en poids du produit de confiserie.

19. Le produit de confiserie selon la revendication 1, dans lequel ladite couche de liant comprend en outre un édulcorant, et ledit liant est sélectionné dans le groupe composé de gommes naturelles, d'hydrocolloïdes et de mélanges de ces derniers.

20. Le produit de confiserie selon la revendication 19, dans lequel ledit édulcorant est sélectionné dans un groupe composé de sucres, polyols, édulcorants à haute intensité, et mélanges de ces derniers.

21. Le produit de confiserie selon la revendication 1, dans lequel ledit enrobage de composé comprend un édulcorant, ladite matière grasse, du lait en poudre et un émulsifiant.

22. Le produit de confiserie selon la revendication 21, dans lequel ledit lait en poudre est sélectionné dans le groupe composé de poudre de lait entier, de poudre de lait écrémé, de poudre de lactérosum, et de mélanges de ces derniers.

23. Le produit de confiserie selon la revendication 21 ou la revendication 22, dans lequel ledit édulcorant est sélectionné dans le groupe composé de saccharose, de sorbitol et de mélanges de ces derniers.

24. Le produit de confiserie selon une quelconque des revendications précédentes, dans lequel ledit enrobage à coque dure est composé d'un sucre sélectionné dans un groupe composé de saccharose, dextrose, maltose, et des mélanges de ces derniers.

25. Le produit de confiserie selon une quelconque des revendications 1 à 23, dans lequel ledit enrobage à coque dure est composé d'un polyol sélectionné dans un groupe composé de sorbitol, maltitol, xylitol, isomaltulose hydrogénée, lactitol, érythritol, et des mélanges de ces derniers.

26. Le produit de confiserie selon une quelconque des revendications 1 à 25, comprenant;
Une première couche de liant, recouvrant ledit coeur du produit de confiserie ; ledit premier enrobage entourant ladite première couche de liant, dans lequel ledit premier enrobage comprend un enrobage composé, l'enrobage composé comprenant ;
i) une matière grasse ;
ii) une poudre de lait ;
iii) Un édulcorant sélectionné dans le groupe composé de saccharose, sorbitol et mélanges de ces derniers ; et
iv) Un émulsifiant ;
une deuxième couche de liant couvrant le premier enrobage ; et
ledit enrobage à coque dur entourant la deuxième couche de liant.

27. Le produit de confiserie selon la revendication 26, dans lequel le coeur du produit de confiserie est un coeur caoutchouteux moelleux, comprenant des matières grasses dans une proportion comprise entre 4% et 10% en poids du coeur moelleux, et de la gélatine dans une proportion comprise entre 1% et 2% en poids du coeur moelleux du produit de confiserie.

28. Le produit de confiserie selon la revendication 26, dans lequel le coeur du produit de confiserie est un coeur caoutchouteux moelleux comprenant de la pectine dans une quantité comprise entre 0,5% et 1 % environ et environ 4% à 8% en poids de gélatine du coeur caoutchouteux du produit de confiserie.

29. Le produit de confiserie selon la revendication 26, dans lequel le coeur du produit de confiserie est un coeur caoutchouteux moelleux comprenant environ 2% de pectine en poids du coeur du produit de confiserie onctueux.

30. Le produit de confiserie selon la revendication 26, dans lequel le coeur du produit de confiserie est un coeur caoutchouteux moelleux pressé comprenant 50% à 60% de sucre, 30% à 40% de sirop de maïs, et 1% à 5% de matières grasses en poids du coeur moelleux pressé du produit de confiserie.

31. Le produit de confiserie selon une quelconque des revendications 26 à 30, dans lequel lesdites première et deuxième couches de liant comprennent :
un édulcorant sélectionné parmi un groupe composé de sucre, sorbitol et des mélanges de ces derniers ; et
un liant sélectionné dans le groupe composé de gomme arabique, amidon modifié et mélanges de ces derniers.

32. Le produit de confiserie selon une quelconque des revendications 1 à 31, dans lequel ledit coeur du produit de confiserie est moelleux et présente une teneur en eau supérieure à 3%.

33. Le produit de confiserie selon la revendication 32, dans lequel la teneur en eau du coeur moelleux du produit de confiserie est comprise entre 5% et 14%.

34. Le produit de confiserie selon une quelconque des revendications précédentes, dans lequel ledit deuxième enrobage est la couche extérieure du produit.

35. Le produit de confiserie selon une quelconque des revendications 1 à 33, comprenant également un troisième enrobage enrobant le deuxième enrobage, le troisième enrobage comprenant une pellicule comprenant des agents filmogènes.

36. Le produit de confiserie selon la revendication 35, dans lequel les agents filmogènes sont sélectionnés dans un groupe composé de celluloses, d'amidons, de maltodextrines, de gommes et de mélanges de ces derniers.

37. Le produit de confiserie selon une quelconque des revendications 1 à 36, dans lequel une série de produits enrobés sont enveloppés par un conditionnement, ou dans lequel une série de produits enrobés sont conditionnés individuellement.

38. Une méthode de production d'un produit de confiserie enrobé, conformément à la définition dans une quelconque des revendications précédentes, comprenant
la réalisation d'un coeur caoutchouteux moelleux ;
la formation d'une première couche de liant sur le coeur du produit de confiserie ;
la formation d'un premier enrobage sur le premier liant ;
la formation d'un deuxième enrobage liant sur le premier liant ;
la formation du deuxième enrobage sur le deuxième liant ;

39. Une méthode conforme à la définition de la revendication 38 pour la production du produit de confiserie enrobé, comprenant les opérations suivantes :
formation d'un coeur de produit de confiserie ;
formation d'un premier enrobage liant sur un coeur du produit de confiserie, application d'une solution de liant présentant un niveau de matières solides allant de 50% à 70% sur le coeur du produit de confiserie, puis application d'un mélange de liant en poudre pour incorporer à sec le coeur de produit de confiserie ;
formation d'un enrobage composé sur le premier enrobage liant, avec application de multiples couches d'un enrobage composé fondu sur le coeur du produit de confiserie, avec refroidissement entre les couches pour solidifier l'enrobage composé ;
formation d'une deuxième couche de liant sur le coeur du produit de confiserie recouvert d'un enrobage composé, avec l'application d'au moins une couche d'une solution de liant ayant un niveau de matières solides allant de 50% à 70% sur le coeur du produit de confiserie à enrobage composé, puis application d'un mélange de liant en poudre pour incorporer à sec le coeur de produit de confiserie à enrobage composé ;
application d'un enrobage à coque dure sur la deuxième couche de liant en enrobant le coeur du produit de confiserie enrobé avec l'application de multiples couches d'un sirop d'enrobage à la casserole, composé d'un sucre, d'un polyol, ou de mélanges de ces derniers ; et
l'application en option d'une pellicule d'enrobage sur le revêtement à coque dure, avec l'application de multiples couches d'un sirop contenant un ou plusieurs agents filmogènes.
